Europäisches Patentamt

European Patent Office

Office européen des brevets

(19)

(11) Publication number: **0 248 157**
**A2**

(12) # EUROPEAN PATENT APPLICATION

(21) Application number: **87104134.9**

(51) Int. Cl.⁴: **H02G 5/06**

(22) Date of filing: **20.03.87**

| | |
|---|---|
| The title of the invention has been amended (Guidelines for Examination in the EPO, A-III, 7.3). | (71) Applicant: **ALFA STANDARD S.p.A.**<br>**Via Madrid, 5**<br>**I-24049 Verdellino-Zingonia (Bergamo)(IT)** |
| (30) Priority: **07.04.86 IT 2145686 U** | (72) Inventor: **Clin, Michel**<br>**Via Macedonio Melloni, 34**<br>**I-20129 Milan(IT)** |
| (43) Date of publication of application:<br>**09.12.87 Bulletin 87/50** | (74) Representative: **Giambrocono, Alfonso, Dr.**<br>**Ing. et al** |
| (84) Designated Contracting States:<br>**AT BE CH DE ES FR GB GR LI NL SE** | **Ing. A. Giambrocono & C. S.r.l. Via Rosolino**<br>**Pilo 19/B**<br>**I-20129 Milano(IT)** |

(54) **Bus bar duct for low voltage electricity distribution systems.**

(57) Busbar trunking for the distribution of low and medium voltage three-phase electricity, of the type comprising a double system of rigid bars for each phase supported between opposing insulators fixed to the structure of the box trunking which encloses them, and in which the pair of busbars of each phase is fed in parallel, said busbar trunking comprising a system of busbars formed in such a manner that the two busbars of each phase are disposed symmetrically about the longitudinal central plane through the trunking, the individual busbars of each phase being connect together mechanically and electrically in parallel by a plurality of bridge-shaped metal connection elements.

EP 0 248 157 A2

## BUSBAR TRUNKING FOR LOW VOLTAGE ELECTRICITY DISTRIBUTION SYSTEMS

This invention relates to busbar trunking particularly suitable for three-phase low and medium voltage electricity distribution systems, of the type comprising a double system of bare busbars of rectangular cross-section in air, in which the particular relative arrangement of the busbars of each phase and their parallel connection system are such as to decisively reduce in particular the destructive effects which stresses due to any short circuiting and other electrical overloading normally produce in the busbar insulators.

Both the single and double busbar systems normally used for three-phase electricity distribution are known to consist of rectangular busbars of aluminium or copper construction which extend a considerable distance along their major axis and are disposed vertically facing each other at a predetermined distance apart within trunking in the form of a substantially parallelepiped metal box housing. The individual busbars are fixed to the ends of wide rectangular apertures provided in vertical metal dividing walls at predetermined distances apart within the metal trunking. The opposite ends of the individual busbars are insulated from the metal parts of said vertical apertures by inserting these ends into insulators provided with a substantially cradle-shaped seat, the insulators themselves being removably housed and fixed in metal supports which are rigidly joined to the edges of the dividing walls by welding or the like.

In the case of busbar trunking for low voltages, and thus for high current intensities, it is also known to use two or more mutually facing busbars connected together in parallel for each phase.

However, none of the constructions used up to the present time prevent the busbars undergoing violent and often permanent deformation in the case of short circuiting or other accidental electrical overloading,, and this in practice often leads to rupture of the insulators. It has also been noted that the losses in busbar trunking of currently known type always remain fairly high.

The main object of the present invention is therefore to provide busbar trunking for three-phase currents of low or medium voltage, which is able to obviate the drawbacks of known type of busbar trunking, and in particular such as to prevent rupture or damage to insulators in the case of short circuiting and accidental overloading.

A further object of the invention is to provide busbar trunking which because of the particular transposing of the busbars of each pair of busbars of one phase with those of the pairs of busbars of the other phases is able to substantially reduce losses within the housing, and to allow the construction of busbar trunking having spans between insulators which are of considerable length, with obvious economical and practical advantages.

These and further objects which will be more apparent from the description given hereinafter are attained by busbar trunking for the distribution of three-phase low and medium voltage electricity, of the type comprising a double system of rigid busbars for each phase which are supported between opposing insulators fixed to the structure of the box trunking which encloses them, and in which the pair of busbars of each phase is fed in parallel, said busbar trunking comprising, according to the present invention, a busbar system formed in such a manner that the pair of busbars of each phase is disposed symmetrically about the longitudinal central plane through the trunking.

The individual busbars of each phase are connected together mechanically and electrically in parallel by a plurality of bridge-shaped metal connection elements.

More particularly, said bridge connections are formed by fixing the end portions of the bridging conductors to the busbar edges immediately upstream and downstream of each insulator.

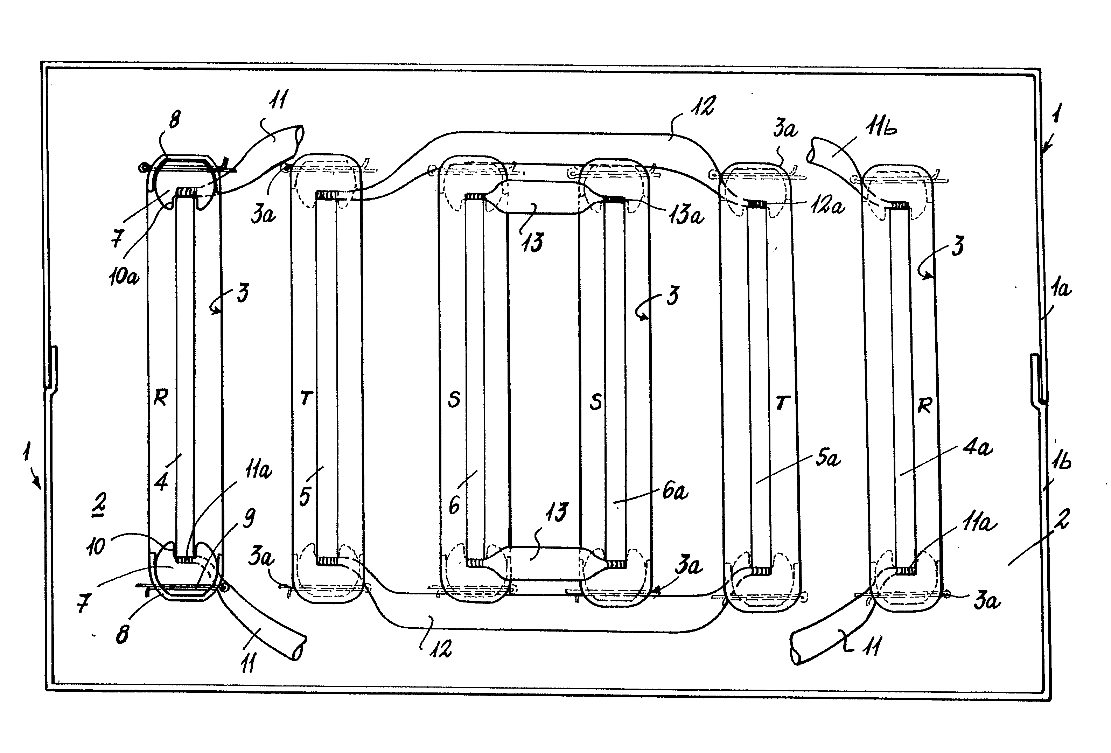

Further structural characteristics of the busbar trunking according to the invention will be apparent from the detailed description given hereinafter with reference to the accompanying drawings provided by way of example only, in which the single figure shows a diagrammatic cross-section through low-voltage busbar trunking constructed in accordance with the invention, this cross-section being taken upstream of the busbar support insulators.

With reference to said single figure, the busbar trunking according to the invention comprises a support and containing structure of known type and busbars suitable for three-phase alternating current of low and medium voltage. For example, said busbar trunking can consist of a very elongated metal box housing 1 of parallelepiped shape, in which metal walls 2 are disposed at predetermined distances apart for supporting the busbars, said walls facing each other at a predetermined distance apart. In each wall or divider 2 there are provided wide substantially rectangular vertical apertures 3 with their ends 3a partly arched.

In the figure under examination, six identical apertures are provided for six busbars, namely for two busbars for each phase of the scheduled three-phase system. The pairs of busbars 4-4a, 5-5a, 6-6a, of known aluminium or copper type, are disposed so as to centrally traverse the apertures 3, and each of them is supported at its ends by insulators 7 etc., which are fixed to the arched regions 3a of the vertical apertures 3 in known manner. This fixing is normally done by a metal cradle 8 welded to the end 3a of the aperture, in the interior of which the body of the insulator 7 is positioned and fixed by a pair of pins or split pins 9. This insulator centrally comprises a substantially cradle-shaped seat 10 and 10a respectively. The ends of the busbars 4, 5 etc. are inserted between the cradles 10 and 10a of two opposing insulators, these busbars being in the form of elements of rectangular cross-section of which the major side is much longer than the minor side.

In the busbar trunking of this structure, the invention provides a particular transposed arrangement of the busbars, and a particular method for connecting them together which has proved able to obviate all the aforesaid drawbacks of known trunking.

Specifically, the present invention uses two busbars for each phase of the scheduled three-phase system, namely the pair of busbars 4-4a for one phase, the pair 5-5a for another phase, and the pair 6-6a for the third phase. Said pair of busbars are disposed in such a manner that the busbar 4 and busbar 4a of the first phase are located at the opposite ends of the busbar system, the busbar 5 and busbar 5a of the second phase are located facing the busbar 4 and busbar 4a of the first phase respectively, and and the busbar 6 and busbar 6a are located facing each other and positioned centrally within the busbar system. In this manner, the first three busbars of each phase face the second three busbars of each phase and are disposed in reverse succession to these latter. In other words, if the conventional symbols are used for the busbars, ie the letters RR-TT-SS for the pairs of busbars of a three-phase system, the busbar arrangement according to the invention is RT-SS-TR.

Again according to the invention, the parallel connection and the mechanical bracing of the pairs of busbars of each phase are obtained by aluminium or copper tubular connection elements 11, 12, 13 substantially of bridge-shape, disposed symmetrically at both edges of the busbars, said connections consisting specifically of tubular elements of constant cross-section, the ends of which are partly arched and then flattened in the terminal regions 11a, 12a, 13a to be then welded to the busbar edges.

The bridge connections 11 connect together the busbars 4-4a of the first phase, the bridge connections 12 connect together the busbars 5-5a of the second phase, and straight tubular elements 13 likewise connect together the opposite ends of the pair of busbars 6-6a.

Advantageously, said bridge connections are disposed immediately upstream and downstream of each insulator.

In practice, and in particular after heating test cycles, it has been found that the particular busbar arrangement drastically reduces energy losses due to induced currents in the housing 1, whereas the bridge connections increase mechanical strength and are able to obviate the often permanent deformation of the busbars, by virtue of the fact that the short circuiting stresses are absorbed by the bridge connections and not by the insulators, which are therefore safeguarded from rupture.

Advantageously, to reduce losses due to induced currents and to facilitate inspection of the trunking, the housing 1 is constructed in two parts 1a and 1b which can be inserted one into the other to form a box.

The particular busbar arrangement according to the invention also enables trunking with spans with greater length than conventional trunking to be formed.

In practice, modifications can obviously be made to the described embodiment of the invention in terms of the shape and size of its components, in addition to the materials, but without leaving the scope of the inventive idea.

## Claims

1. Busbar trunking for the distribution of three-phase low and medium voltage electricity, of the type comprising a double system of bare rectangular busbars in air, each of which is supported by opposing insulators fixed to the trunking structure, characterised in that the busbars of each pair are disposed symmetrically about the longitudinal central plane of the trunking so as to obtain in succession three busbars of different phases followed by the other three busbars of the same phases but in the reverse succession, the individual pairs of busbars of each phase being connected together in parallel by bridge-shaped metal elements and fixed to both busbars of each pair of busbars.

2. Busbar trunking as claimed in claim 1, characterised in that said bridge connections are disposed symmetrically at both opposite edges of the pairs of busbars ad are formed by fixing the end portions of the bridging conductors to the edges of the busbars immediately upstream and downstream of each insulator.

3. Busbar trunking as claimed in claims 1 and 2, characterised in that said elements forming the bridge connections consist of metal tubes, preferably of aluminium or copper, having their opposite ends flattened.

4. Busbar trunking as claimed in the preceding claims, characterised in that the metal housing which encloses the busbars is divided into at least two parts, these being two substantially half-boxes, to be connected together by mutual insertion or the like.

5. Busbar trunking as claimed in the preceding claims, characterised by being formed for the aforesaid objects, as described and as illustrated by way of example on the accompanying drawing.

0 248 157